# EUROPÄISCHE PATENTSCHRIFT

(11) **EP 1 963 149 B1**
(45) Veröffentlichungstag und Bekanntmachung des Hinweises auf die Patenterteilung: **08.01.2020**
(21) Anmeldenummer: 06819543.7
(22) Anmeldetag: 16.11.2006
(51) Int. Cl.: B60T 7/12, B60T 7/22, B60R 21/01

(54) **SICHERHEITSEINRICHTUNG FÜR KRAFTFAHRZEUGE**
SAFETY DEVICE FOR MOTOR VEHICLES
DISPOSITIF DE SECURITE POUR VEHICULES AUTOMOBILES

(30) Priorität: 15.12.2005 DE 102005059903
(43) Veröffentlichungstag der Anmeldung: 03.09.2008
(73) Patentinhaber: ROBERT BOSCH GMBH, 70442 Stuttgart (DE)
(72) Erfinder: LUCAS, Bernhard, 74354 Besigheim (DE); MEISTER, Dirk, 71696 Moeglingen (DE); AHLRICHS, Ulrike, 70825 Korntal-Muenchingen (DE); WILHELM, Ulf, 71277 Rutesheim (DE)
(86) Internationale Anmeldenummer: PCT/EP2006/068565
(87) Internationale Veröffentlichungsnummer: WO 2007/071503

(56) Entgegenhaltungen:
- EP-A1- 1 310 412
- EP-A2- 1 010 596
- WO-A-2006/061299

## Beschreibung

### Stand der Technik

Die Erfindung betrifft eine Sicherheitseinrichtung für Kraftfahrzeuge, mit einem Aufpralldetektionssystem und einer Auslöseeinrichtung zur Auslösung eines Bremsvorgangs in Abhängigkeit von einem Signal des Aufpralldetektionssystems.

Aus DE 199 12 301 und EP-A2-1 010 596 ist eine Sicherheitseinrichtung dieser Art bekannt, bei der das Aufpralldetektionssystem durch Beschleunigungssensoren gebildet wird, die zugleich zur Auslösung eines Airbagsystems dienen können. Wenn bei einer Kollision mit einem anderen Fahrzeug die von den Beschleunigungssensoren gemessene Beschleunigung einen bestimmten Schwellenwert überschreitet und danach, gegen Ende der Kollision, wieder unter einen bestimmten Schwellenwert absinkt, so wird nach der Unterschreitung des letztgenannten Schwellenwertes automatisch die Fahrzeugbremse aktiviert. Dadurch sollen insbesondere die Kollisionsschäden bei einem Aufprall auf das Heck des Fahrzeugs minimiert werden. Während des eigentlichen Aufprallvorgangs ist die Fahrzeugbremse noch unbetätigt, damit ein möglichst großer Teil der Aufprallenergie in Bewegungsenergie umgesetzt wird und dementsprechend weniger Energie zur Verformung des eigenen Fahrzeugs zur Verfügung steht. Durch die automatische Bremsung des Fahrzeugs nach dem Aufprall wird dann die Gefahr von Folgeschäden minimiert, die sich insbesondere dadurch ergeben können, daß das eigene Fahrzeug durch den Aufprall auf das Heck nach vorn beschleunigt wird und dann seinerseits auf eine vorderes Fahrzeug auffährt.

Zur Verbesserung der Sicherheit und des Fahrkomforts sind andererseits Abstandswarnsysteme und Abstandsregelsysteme entwickelt worden, die ein Ortungssystem, beispielsweise in der Form eines Radarsensors aufweisen, das es gestattet, Objekte im Vorfeld des eigenen Fahrzeugs zu orten und deren Abstände und Relativgeschwindigkeiten zu messen. Wenn sich dabei ergibt, daß der Sicherheitsabstand zu einem vorausfahrenden Fahrzeug unterschritten wird, so wird automatisch ein Warnsignal ausgegeben, oder das System greift automatisch in die Längsführung des Fahrzeugs ein, um den Abstand zum Vorderfahrzeug zu regeln.

Aufbauend auf dieser Technologie sind auch automatische Notbremssysteme entwickelt worden. Beispielsweise beschreibt DE 36 37 165 A1 ein System, das anhand der Ortungsdaten des Radarsensors automatisch eine Situation erkennt, in der eine Kollision voraussichtlich nicht mehr abwendbar ist, und das den voraussichtlichen Kollisionszeitpunkt berechnet und auf dieser Grundlage in mehreren Stufen Gegenmaßnahmen zur Verminderung der Kollisionsschäden einleitet. In der ersten Stufe wird lediglich ein Warnhinweis an den Fahrer ausgegeben. Wenn der Fahrer nicht reagiert, wird in einer zweiten Stufe automatisch ein Bremsvorgang mit mäßiger Bremskraft eingeleitet. Wenn dies zur Abwendung der Kollision nicht ausreicht, wird schließlich automatisch eine Notbremsung mit maximaler Bremskraft eingeleitet. Solche Notbremssysteme haben sich jedoch in der Praxis bisher nicht durch setzen können. Ein wesentlicher Nachteil besteht darin, daß die bisher zur Verfügung stehende Sensorik keine zuverlässige Einschätzung der Verkehrssituation erlaubt, so daß es zu Fehlauslösungen kommen kann, von denen dann ihrerseits eine erhebliche Unfallgefahr ausgeht.

Im Hinblick auf dieses Problem wird in DE 101 18 707 A1 ein System beschrieben, das bei erkannter Kollisionsgefahr nicht automatisch einen Notbremsvorgang einleitet, sondern nur das Bremssystem auf eine bevorstehende Notbremsung vorbereitet, beispielsweise durch Vorspannung der Bremszylinder (Prefill), so daß dann, wenn der Fahrer selbst die Notbremsung einleitet, die Bremswirkung schneller entfaltet werden kann. Bei diesem System ist jedoch eine Vermeidung der Kollision oder eine Milderung der Kollisionsschäden nur dann möglich, wenn der Fahrer aktiv in das Geschehen eingreift.

Aus EP 1 310 412 A1 ist es bekannt, bei einem Aufprall die Parkbremse des Fahrzeugs zu betätigen, damit weitere Folgeschäden vermieden werden, die etwa bei einem unfallbedingten Ausfall des hydraulischen Fahrbremssystems eintreten könnten.

### Vorteile der Erfindung

Die Erfindung mit den in Anspruch 1 angegebenen Merkmalen ermöglicht eine Milderung der Kollisionsschäden durch automatische Auslösung einer Notbremsung mit erheblich verminderter Gefahr von Fehlauslösungen.

Dies wird erfindungsgemäß bei einem System der eingangs genannten Art dadurch erreicht, daß die Notbremsung automatisch in dem Augenblick ausgelöst wird, in dem das Aufpralldetektionssystem den Beginn eines Aufpralls erkennt.

Durch dieses System läßt sich zwar die Kollision nicht mehr abwenden, doch wird durch die Betätigung der Bremse während der Kollision (In-Crash-Brake) erreicht, daß ein Teil der Bewegungsenergie des eigenen Fahrzeugs durch den Bremsvorgang aufzehrt wird. Auf diese Weise wird das Ausmaß der Schäden an den an der Kollision beteiligten Fahrzeugen verringert.

Moderne Fahrzeuge sind so konstruiert, daß bei einem Aufprall ein großer Teil der Aufprallenergie durch Verformung einer sogenannten Knautschzone im vorderen Teil der Fahrzeugkarosserie aufgezehrt wird, während die relativ stabil ausgebildete Fahrgastzelle möglichst unversehrt bleibt. Die erfindungsgemäße Sicherheitseinrichtung bewirkt gleichsam eine virtuelle Verlängerung der Knautschzone und verringert damit die Gefahr, daß die Fahrgastzelle so stark verformt wird, daß es zu Verletzungen der Fahrzeuginsassen kommt. Da die Notbremsung automatisch, ohne Mitwirkung des Fahrers ausgelöst wird, ist die Sicherheitseinrichtung auch dann wirksam, wenn der Fahrer infolge der Kollision vom Bremspedal abrutscht oder aufgrund der erlittenen Kollisionsschäden nicht mehr in der Lage ist, den Bremsvorgang fortzusetzen. Da die Bremse auch nach der Kollision aktiv bleibt, ist auch sichergestellt, daß das Fahrzeug nach der Kollision alsbald zum Stillstand gebracht wird. Dies verringert die Gefahr, daß es zu weiteren Schäden kommt, weil das Fahrzeug ins Schleudern gerät und/oder mit weiteren Hindernissen kollidiert. Dieser Effekt ist naturgemäß vor allem dann besonders vorteilhaft, wenn das Fahrzeug außerdem mit einem Antiblockiersystem oder einem elektronischen Stabilitätssystem ausgerüstet ist.

Besonders vorteilhaft ist die Erfindung in Kombination mit einem Airbagsystem, das bei heutigen Kraftfahrzeugen ohnehin zum Sicherheitsstandard gehört und das die Bewegung der Fahrzeuginsassen relativ zu dem (durch die erfindungsgemäße Notbremsung zusätzlich verzögerten) Fahrzeug abfängt.

Vorteilhafte Weiterbildungen und Ausgestaltungen der Erfindung ergeben sich aus den Unteransprüchen.

Wenn das Fahrzeug mit einem Airbagsystem ausgerüstet ist, so wird das Aufpralldetektionssystem zweckmäßig durch die zum Airbagsystem gehörenden Aufprall- oder Beschleunigungssensoren gebildet.

In einer besonders bevorzugten Ausführungsform umfaßt die Sicherheitseinrichtung außerdem ein Ortungssystem und eine Kollisionsvorhersageeinrichtung, die anhand der Ortungsdaten und der Bewegungsdaten des eigenen Fahrzeugs eine bevorstehende Kollision vorhersagt. Die Sicherheitseinrichtung kann dann so ausgestaltet sein, daß die automatische Auslösung des Notbremsvorgangs nur dann erfolgt, wenn die Kollisionsvorhersageeinrichtung eine bevorstehende Kollision anzeigt und dann das Aufpralldetektionssystem den Beginn der Kollision anzeigt.

Zu herkömmlichen Airbagsystemen gehörende Aufpralldetektionssysteme haben generell eine relativ hohe Auslöseschwelle, damit Fehlauslösungen des Airbagsystems vermieden werden. Gemäß einer zweckmäßigen Weiterbildung der Erfindung ist die Sicherheitseinrichtung so konfiguriert, daß die Auslöseschwelle des Aufpralldetektionssystems reduziert wird, sobald das Kollisionsvorhersagesystem eine bevorstehende Kollision anzeigt. Dies gilt in erster Linie für die Auslöseschwelle, die die Auslösung des Notbremsvorgangs bestimmt, doch kann es zweckmäßig sein, auch die Schwelle für die Auslösung des Airbagsystems herabzusetzen, damit die Airbags ihre Schutzwirkung früher entfalten. Letzteres ist besonders vorteilhaft bei einem Aufprall auf relativ weiche Hindernisse, beispielsweise auf die Reifen eines schweren Zugfahrzeugs, da bei einem solchen Aufprall die reguläre Auslöseschwelle herkömmlicher Airbagsysteme oft nicht erreicht wird.

Die Erfindung läßt sich auch zweckmäßig mit einem Notbremssystem kombinieren, das auf eine möglichst frühzeitige Auslösung des Notbremsvorgangs abzielt, um die Kollision nach Möglichkeit doch noch abzuwenden. Bei einem solchen System erzeugt die Kollisionsvorhersageeinrichtung anhand der Daten des Ortungssystems und der Bewegungsdaten des eigenen Fahrzeugs ein mehrwertiges Signal, das ein Maß für die Kollisionswahrscheinlichkeit ist, und der Notbremsvorgang wird ausgelöst, sobald die Kollisionswahrscheinlichkeit einen bestimmten Schwellenwert überschreitet. Im Hinblick auf die bereits erwähnte Gefahr, die von einer Fehlauslösung der Notbremsung ausgeht, muß der Schwellenwert jedoch relativ hoch gewählt werden. Durch die Erfindung wird dann erreicht, daß zumindest im Augenblick der Kollision der Notbremsvorgang auch dann eingeleitet wird, wenn die Kollisionswahrscheinlichkeit den Schwellenwert nicht erreicht. Dies ist vor allem deshalb von Vorteil, weil die üblicherweise eingesetzten Ortungssysteme, beispielsweise Radarsensoren, eine Abstandsmessung nur so lange vornehmen können, wie der Abstand des Hindernisses noch größer als ein bestimmter Mindestwert ist, so daß kurz vor der Kollision, wenn der Abstand des Hindernisses sehr klein wird, keine verläßliche Berechnung der Kollisionswahrscheinlichkeit mehr möglich ist.

### Zeichnung

Ausführungsbeispiele der Erfindung sind in den Zeichnungen dargestellt und in der nachfolgenden Beschreibung näher erläutert.

Es zeigen:
Figur 1 ein Blockdiagramm einer erfindungsgemäßen Sicherheitseinrichtung;
Figur 2 und 3 Diagramme zur Erläuterung der Wirkungsweise der Sicherheitseinrichtung in unterschiedlichen Situationen;
Figur 4 ein Diagramm zur Erläuterung der Wirkungsweise einer Sicherheitseinrichtung gemäß einem abgewandelten Ausführungsbeispiel; und
Figur 5 ein Flußdiagramm zur Illustration der Arbeitsweise der Sicherheitseinrichtung. Beschreibung der Ausführungsbeispiele

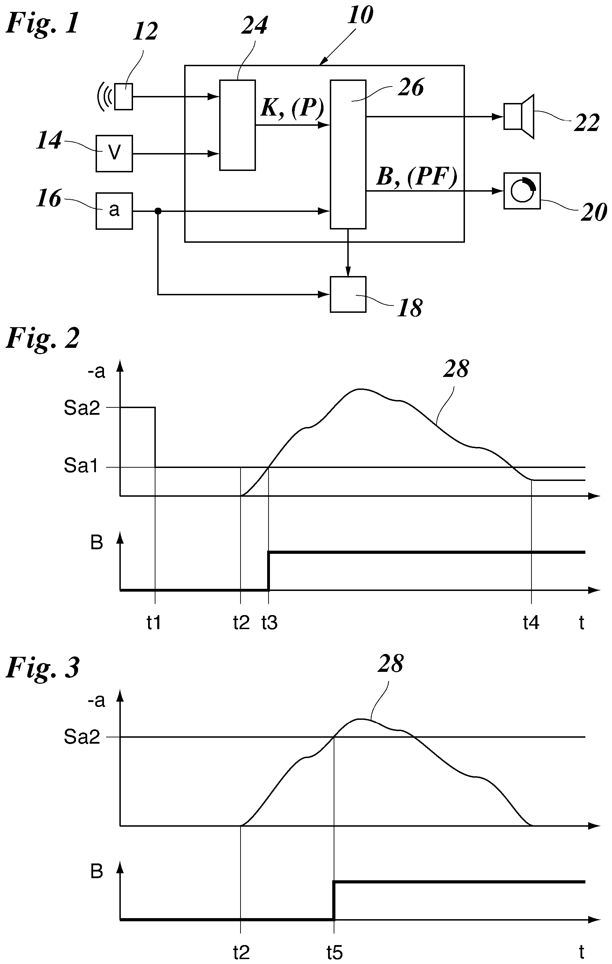

Die in Figur 1 gezeigte Sicherheitseinrichtung umfaßt ein elektronisches Datenverarbeitungssystem 10, das Daten eines Ortungssystems 12, eines Geschwindigkeitsmessers 14 und eines Aufpralldetektionssystems 16 aufnimmt. Das Ortungssystem 12 wird beispielsweise durch einen Radarsensor gebildet, der Objekte, insbesondere vorausfahrende Fahrzeuge, im Vorfeld des mit der Sicherheitseinrichtung ausgerüsteten (eigenen) Fahrzeugs ortet und deren Abstände, Relativgeschwindigkeiten und Azimutwinkel mißt. Der Geschwindigkeitsmesser 14 mißt die Geschwindigkeit V des eigenen Fahrzeugs. Das Aufpralldetektionssystem 16 wird beispielsweise durch einen oder mehrere Beschleunigungssensoren (Trägheitssensoren) gebildet, die die Beschleunigung a des eigenen Fahrzeugs messen und u.a. dazu dienen, im Kollisionsfall ein Airbagsystem 18 zu aktivieren.

Das Datenverarbeitungssystem 10 ist vorzugsweise Teil eines ACC-Systems (Adaptive Cruise Control), das dazu dient, die Geschwindigkeit des eigenen Fahrzeugs und/oder anhand der Daten des Ortungssystems 12 den Abstand zu einem unmittelbar vorausfahrenden Fahrzeug zu regeln, und das zu diesem Zweck in das Antriebssystem sowie in das Bremssystem 20 des Fahrzeugs eingreift. Eine Mensch/Maschine-Schnittstelle 22 ermöglicht es dem ACC-System, Informationen an den Fahrer zu übermitteln, u.a. in der Form von akustischen Warnsignalen. Zur Ausführung der verschiedenen Regelungs- und Steuerungsfunktionen weist das ACC-System verschiedene Funktionsmodule auf, die als spezialisierte Hardware oder als Softwaremodule ausgebildet sein können. Zu diesen Modulen gehören eine Kollisionsvorhersageeinrichtung 24 und eine Auslöseeinrichtung 26, die durch Ausgabe eines Bremsbefehls B an das Bremssystem 20 einen Notbremsvorgang auslösen kann. Die Kollisionsvorhersageeinrichtung 24 bewertet die Verkehrssituation anhand der vom Ortungssystem 12 gelieferten Ortungsdaten von potentiellen Hindernissen und anhand der Bewegungsdaten des eigenen Fahrzeugs, insbesondere anhand der Geschwindigkeit V. Anhand der vom Radarsensor gelieferten Abstands-und Azimutwinkeldaten werden die georteten Objekte identifiziert, die sich im voraussichtlichen Fahrkorridor des eigenen Fahrzeugs befinden. Zur Abschätzung dieses Fahrkorridors kann die Kollisionsvorhersageeinrichtung 24 ggf. auch noch Daten weiterer nicht gezeigter Sensoren aufnehmen, beispielsweise eines Gierraten- oder Lenkwinkelsensors. Anhand der gemessenen Abstände und Relativgeschwindigkeiten der Objekte im Fahrkorridor und anhand der Fahrgeschwindigkeit V des eigenen Fahrzeugs berechnet die Kollisionsvorhersageeinrichtung 24 dann für jedes Objekt die Verzögerung des eigenen Fahrzeugs, die notwendig wäre, um eine Kollision mit dem betreffenden Objekt zu vermeiden. Wenn diese Verzögerung dem Betrage nach größer ist als ein plausibler Wert für die tatsächlich mögliche Verzögerung des eigenen Fahrzeugs, so entscheidet die Kollisionsvorhersageeinrichtung 24, daß eine Kollision bevorsteht, und sie übermittelt ein Kollisionssignal K an die Auslöseeinrichtung 26.

Da die von der Kollisionsvorhersageeinrichtung 24 ausgewerteten Daten je nach Verkehrssituation mit mehr oder weniger großen Unsicherheiten behaftet sein können, kann es sich bei dem Kollisionssignal K wahlweise auch um ein mehrwertiges Signal handeln, das eine bestimmte Kollisionswahrscheinlichkeit P angibt. Wenn die Auslöseeinrichtung 26 das Kollisionssignal K empfängt oder wenn die Kollisionswahrscheinlichkeit oberhalb eines bestimmten Schwellenwertes liegt, veranlaßt sie zunächst die Ausgabe eines Warnsignals an den Fahrer über die Mensch/Maschine-Schnittstelle 22. Wahlweise kann sie zugleich ein Prefill-Signal PF an das Bremssystem 20 ausgeben, um die Bremszylinder so vorzuspannen, daß die Bremse bei einem zu erwartenden Notbremsvorgang, der durch den Fahrer oder auch automatisch durch die Sicherheitseinrichtung ausgelöst werden kann, schneller reagiert.

Außerdem wertet die Auslöseeinrichtung 26 die vom Aufpralldetektionssystem 16 gemessene Beschleunigung a des eigenen Fahrzeugs aus. Wenn eine gewisse Kollisionswahrscheinlichkeit besteht und die Beschleunigung a einen bestimmten Schwellenwert überschreitet, der auf eine beginnende Kollision mit einem Hindernis hindeutet, so gibt die Auslöseeinrichtung 26 an das Bremssystem 20 einen Notbremsbefehl B aus, um automatisch eine Notbremsung des Fahrzeugs einzuleiten. Diese Vorgänge sollen nachstehend anhand der Figuren 2 und 3 näher illustriert werden. In Figur 2 gibt die Kurve 28 die vom Aufpralldetektionssystem 16 gemessene negative Beschleunigung (-a), also die Verzögerung, des Fahrzeugs in Abhängigkeit von der Zeit t an. Diese Verzögerung wird mit einem unteren Schwellenwert Sa1 und einem oberen Schwellenwert Sa2 verglichen. Solange keine Kollisionswahrscheinlichkeit besteht, gilt der höhere Schwellenwert Sa2. Zum Zeitpunkt t1 erkennt die Kollisionsvorhersageeinrichtung 24 eine bevorstehende Kollision und gibt das Kollisionssignal K aus. Dies veranlaßt die Auslöseeinrichtung 26, den Schwellenwert auf Sa1 herabzusetzen. Gleichzeitig wird an den Fahrer das Warnsignal und an das Bremssystem 20 das Prefill-Signal PF ausgegeben. Zum Zeitpunkt t2 trifft die vordere Stoßstange des Fahrzeugs auf ein Hindernis, so daß die Fahrzeugverzögerung entsprechend der Kurve 28 zunimmt. Zum Zeitpunkt t3 überschreitet die Verzögerung den Schwellenwert Sa1, und die Auslöseeinrichtung 26 gibt den Bremsbefehl B aus, so daß das Fahrzeug nun mit maximaler Bremskraft gebremst wird. Der weitere Verlauf der Kurve 28 repräsentiert die Fahrzeugverzögerung während des Kollisionsprozesses, d.h., während der Verformung der Knautschzone des Fahrzeugs. Da während dieses Prozesses die Fahrzeugbremse mit maximaler Bremskraft wirksam ist, ergibt sich eine zusätzliche Fahrzeugverzögerung, und ein Teil der Aufprallenergie wird durch die Reibung zwischen Reifen und Fahrbahn aufgezehrt, so daß die Kollisionsschäden abgemildert werden und insbesondere eine Verformung oder Beschädigung der relativ stabilen Fahrgastzelle des Fahrzeugs weitgehend vermieden werden kann. Zum Zeitpunkt t4 ist die Kollision beendet, beispielsweise weil das Hindernis weggeschleudert wurde, doch hat die Geschwindigkeit des eigenen Fahrzeugs noch nicht auf 0 abgenommen. Der Bremsbefehl B ist auch weiterhin aktiv, so daß das Fahrzeug weiter abgebremst wird. Auf diese Weise wird eine unkontrollierte Bewegung des Fahrzeugs nach der Kollision weitgehend vermieden, auch dann, wenn der Fahrer nicht oder nicht mehr in das Geschehen eingreift. In dem in Figur 1 gezeigten Beispiel wirkt die Auslöseeinrichtung 26 auch auf das Airbagsystem 18 ein, und die Schwellenwerte Sa1 und Sa2, die für die Auslösung der Notbremsung gelten, sind zugleich die Schwellenwerte für die Auslösung des AirbagSystems. Da in Anbetracht der bevorstehenden Kollision der Schwellenwert auf Sa1 abgesenkt wurde, werden somit auch die Airbags früher gezündet, so daß sie ihre Schutzwirkung früher entfalten und die Insassen wirksamer schützen. Die fortgesetzte Verzögerung des Fahrzeugs auch nach dem Ende der Kollision (Zeitpunkt t4) trägt außerdem dazu bei, die Zurückprallbewegung der Fahrzeuginsassen nach dem Auftreffen auf den Airbag zu mildern.

Figur 3 illustriert den Fall, daß die Kollisionsvorhersageeinrichtung 24 aus irgendeinem Grund, beispielsweise wegen Erblindung des Radarsensors, die Kollisionsgefahr nicht erkennt, so daß es zum Zeitpunkt t2 ohne Vorwarnung zum Aufprall kommt. Der Schwellenwert ist in diesem Fall nicht herabgesetzt worden, sondern hat den Wert Sa2 behalten. Dieser Schwellenwert wird dann erst zu einem späteren Zeitpunkt t5 erreicht und führt dann zum Zünden der Airbags sowie zur Ausgabe des Bremsbefehls B. Die etwas spätere Auslösung der Notbremsung ermöglicht es immer noch, einen Teil der Aufprallenergie aufzunehmen und die Kollisionsschäden in gewissem Ausmaß zu mildern.

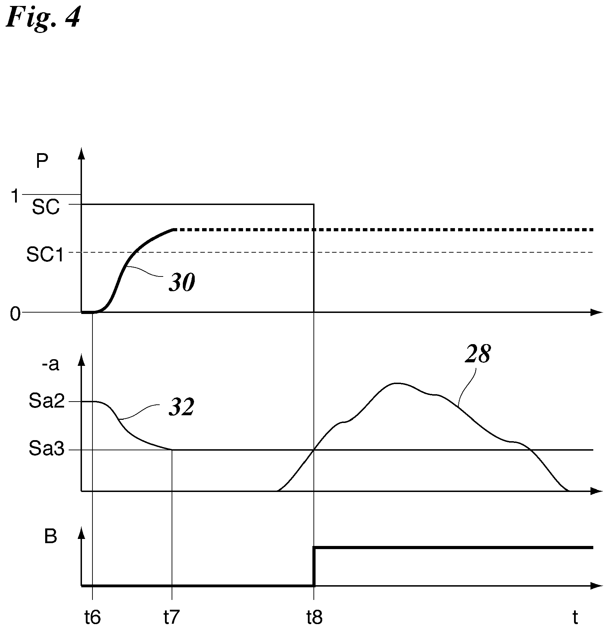

Figur 4 zeigt ein modifiziertes Ausführungsbeispiel, bei dem das Kollisionssignal K ein mehrwertiges Signal ist, das eine Kollisionswahrscheinlichkeit zwischen 0 (Kollision ausgeschlossen) und 1 (Kollision sicher) angibt. Die Auslöseeinrichtung 26 ist in diesem Fall so programmiert, daß sie den Bremsbefehl B auch unabhängig vom Signal des Aufpralldetektionssystems 16 ausgeben kann, also schon vor Eintritt der Kollision, sofern die bevorstehende Kollision fast sicher ist, nämlich dann, wenn die Kollisionswahrscheinlichkeit P einen Schwellenwert SC erreicht. Um Fehlauslösungen zu vermeiden, ist dieser Schwellenwert jedoch knapp unter 1 gewählt, so daß auch Fälle eintreten können, in denen es tatsächlich zur Kollision kommt, ohne daß der Schwellenwert SC erreicht wird. Im gezeigten Beispiel erkennt die Kollisionsvorhersageeinrichtung 24 ab dem Zeitpunkt t6 eine gewisse Kollisionsgefahr, und die Kollisionswahrscheinlichkeit P beginnt gemäß der Kurve 30 zu steigen. Der Schwellenwert für die vom Aufpralldetektionssystem 16 gemessene Beschleunigung (-a) wird in Abhängigkeit von der Kollisionswahrscheinlichkeit P variiert und nimmt von dem Anfangswert Sa2 aus in dem Maße ab, wie die Kollisionswahrscheinlichkeit steigt, wie in Figur 4 durch die Kurve 32 angegeben wird. Die Kollisionswahrscheinlichkeit P (Kurve 30) erreicht nicht den Schwellenwert SC, und zu einem Zeitpunkt t7 hat der Abstand zum Hindernis so weit abgenommen, daß der Radarsensor keine genaue Abstandsmessung mehr vornehmen kann. Die Kollisionswahrscheinlichkeit P läßt sich daher nicht mehr aktualisieren, sondern wird auf dem erreichten Wert festgehalten, wie durch eine gestrichelte Fortsetzung der Kurve 30 angedeutet wird. Dementsprechend bleibt der Schwellenwert für die Beschleunigung dann auf dem Wert Sa3. Die Kurve 28 erreicht zum Zeitpunkt t8 diesen Schwellenwert, was die Ausgabe des Bremssignals B (und ggf. die Zündung der Airbags) auslöst. Somit ist sichergestellt, daß auch bei nicht genügend hoher Kollisionswahrscheinlichkeit spätestens bei Einsetzen der Kollision die Notbremsung ausgelöst wird.

Die Abhängigkeit des Schwellenwertes für die Beschleunigung (Kurve 32) von der Kollisionswahrscheinlichkeit P muß hier so sein, daß die Notbremsung nicht bereits dann ausgelöst wird, wenn der Fahrer selbst die Bremse betätigt und dadurch das Fahrzeug verzögert. Das heißt, solange die Kollisionswahrscheinlichkeit P unter dem Schwellenwert SC bleibt, muß der Schwellenwert für die Beschleunigung größer sein als die maximal erreichbare Fahrzeugverzögerung.

Gemäß einer Verfeinerung kann die tatsächlich auf die Fahrzeugbremse ausgeübte Bremskraft gemessen und die dieser Bremskraft entsprechende Fahrzeugverzögerung von der vom Aufpralldetektionssystem 16 gemessenen Beschleunigung subtrahiert werden, so daß die Kurve 28 nur die durch den Aufprall bedingte Verzögerung angibt. In dem Fall läßt sich der durch die Kurve 32 gegebene Schwellenwert fast bis auf 0 absenken, so daß eine höhere Empfindlichkeit bei der Aufpralldetektion erreicht wird. Dies ist im Prinzip auch bei der Ausführungsform nach Figuren 2 und 3 möglich.

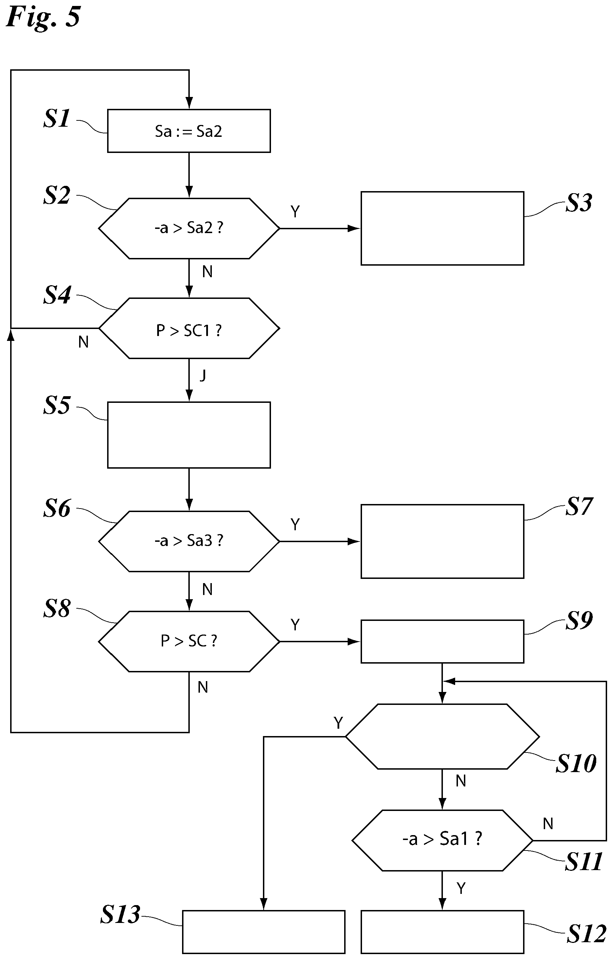

Eine weitere Abwandlung der Ausführungsform nach Figur 4 besteht darin, daß der Schwellenwert für die Beschleunigung nicht stetig, gemäß der Kurve 32, variiert wird, sondern nur von einem höheren Wert Sa2 auf einen niedrigeren Wert Sa3 wechselt, sobald die Kollisionswahrscheinlichkeit P einen niedrigeren Schwellenwert SC1 überschreitet (in Figur 4 gestrichelt angedeutet). Figur 5 illustriert diese Ausführungsform anhand eines Flußdiagramms.

In Schritt S1 wird der Schwellenwert Sa für die Beschleunigung initialisiert und auf den höheren Wert Sa2 gesetzt. In Schritt S2 wird geprüft, ob die (negative) Beschleunigung -a größer ist als Sa2. Wenn dies der Fall ist, wird in Schritt S3 die Notbremsung ausgelöst, und die Airbags werden gezündet. Wahlweise können für das Zünden der Airbags auch andere Schwellenwerte gelten als für die Auslösung der Notbremsung.

Wenn die in Schritt S2 geprüfte Bedingung nicht erfüllt ist, wird in Schritt S4 geprüft, ob die Kollisionswahrscheinlichkeit P den kleineren Schwellenwert SC1 erreicht hat. Ist dies nicht der Fall, erfolgt ein Rücksprung zu Schritt S1 und die oben beschriebenen Schritte werden in einer Schleife zyklisch wiederholt.

Wenn die Kollisionswahrscheinlichkeit den Schwellenwert SC1 überschreitet, wird in Schritt S5 der Schwellenwert Sa für die Beschleunigung auf Sa3 herabgesetzt, und die Auslöseeinrichtung 26 gibt das Prefill-Signal PF aus. In Schritt S6 wird dann geprüft, ob die Beschleunigung den Schwellenwert Sa3 erreicht hat (Einsetzen der Kollision). In dem Fall werden in Schritt S7 die Notbremsung und das Zünden der Airbags ausgelöst. Andernfalls wird in Schritt S8 geprüft, ob die Kollisionswahrscheinlichkeit P den höheren Schwellenwert SC erreicht hat. Wenn nein, erfolgt ein Rücksprung zu S1, und andernfalls wird in Schritt S9 die Notbremsung ausgelöst.

Im Anschluß an Schritt S9 wird in Schritt S10 geprüft, ob der erwartete, von der Kollisionsvorhersageeinrichtung 24 berechnete Kollisionszeitpunkt bereits überschritten ist. Wenn dies nicht der Fall ist, wird in Schritt S11 erneut geprüft, ob die Beschleunigung -a den Schwellenwert Sa1 überschritten hat. Wenn ja, wenn also die Kollision einsetzt, werden in Schritt S12 die Airbags gezündet. Andernfalls erfolgt ein Rücksprung zu Schritt S10, und die Schleife mit den Schritten S10 und S12 wird so lange wiederholt, bis die Kollision eintritt. Falls es trotz der hohen Kollisionswahrscheinlichkeit P (Schritt S8) nicht zu der erwarteten Kollision kommt, wird die Schleife über Schritt S10 verlassen, und in Schritt S13 wird die Notbremsung abgebrochen, damit es nicht zu einem Auffahrunfall mit einem Nachfolgefahrzeug kommt.

In einer vereinfachten Ausführungsform können die Schritte S2, S3 und S8 bis S13 entfallen.

## Patentansprüche

1. Sicherheitseinrichtung für Kraftfahrzeuge, mit einem Aufpralldetektionssystem (16) und einer Auslöseeinrichtung (26) zur Auslösung eines Bremsvorgangs in Abhängigkeit von einem Signal (a) des Aufpralldetektionssystems, wobei der Bremsvorgang durch Betätigung einer Fahrbremse des Kraftfahrzeugs ausgelöst wird, **dadurch gekennzeichnet, daß** die Auslöseeinrichtung (26) dazu ausgebildet ist, den Bremsvorgang auszulösen, wenn das Aufpralldetektionssystem (16) den Beginn eines Aufpralls am vorderen Teil der Fahrzeugkarosserie anzeigt.

2. Sicherheitseinrichtung nach Anspruch 1, **dadurch gekennzeichnet, daß** das Aufpralldetektionssystem (16) Teil eines Airbagsystems (18) ist und auch zur Auslösung des Airbags dient.

3. Sicherheitseinrichtung nach Anspruch 1 oder 2, **dadurch gekennzeichnet, daß** es ein Ortungssystem (12) zur Ortung von Hindernissen im Vorfeld des Fahrzeugs und eine Kollisionsvorhersageeinrichtung zur Vorhersage einer bevorstehenden Kollision mit einem Hindernis aufweist und daß die Auslösung des Bremsvorgangs durch die Auslöseeinrichtung (26) auch vom Ergebnis der Kollisionsvorhersage abhängig ist.

4. Sicherheitseinrichtung nach Anspruch 3, **dadurch gekennzeichnet, daß** das Aufpralldetektionssystem (16) mindestens einen Beschleunigungssensor zur Messung einer durch einen Aufprall bedingten Beschleunigung des Fahrzeugs aufweist und daß die Auslöseeinrichtung (26) dazu ausgebildet ist, den Bremsvorgang auszulösen, wenn die Beschleunigung einen Schwellenwert (Sa) überschreitet, sowie dazu, den Schwellenwert (Sa) in Abhängigkeit vom Ergebnis der Kollisionsvorhersage zu variieren.

5. Sicherheitseinrichtung nach den Ansprüchen 2 und 4, **dadurch gekennzeichnet, daß** die Auslöseeinrichtung (28) dazu ausgebildet ist, auch den Schwellenwert für die Auslösung des Airbagsystems (18) in Abhängigkeit vom Ergebnis der Kollisionsvorhersage zu variieren.

## Claims

1. Safety device for motor vehicles, having an impact detection system (16) and a triggering device (26) for triggering a braking process in accordance with a signal (a) of the impact detection system, wherein the braking process is triggered by activating a travel brake of the motor vehicle, **characterized in that** the triggering device (26) is designed to trigger the braking process if the impact detection system (16) indicates the start of an impact at the front part of the vehicle bodywork.

2. Safety device according to Claim 1, **characterized in that** the impact detection system (16) is part of an airbag system (18) and also serves for triggering the airbag.

3. Safety device according to Claim 1 or 2, **characterized in that** it has a locating system (12) for locating obstacles in the area in front of the vehicle and a collision prediction device for predicting an imminent collision with an obstacle, and **in that** the triggering of the braking process by the triggering device (26) is also dependent on the result of the prediction of a collision.

4. Safety device according to Claim 3, **characterized in that** the impact detection system (16) has at least one acceleration sensor for measuring an acceleration of the vehicle which is conditioned by an impact, and **in that** the triggering device (26) is designed to trigger the braking process if the acceleration exceeds a threshold value (Sa), and to vary the threshold value (Sa) in accordance with the result of the prediction of a collision.

5. Safety device according to Claims 2 and 4, **characterized in that** the triggering device (28) is designed also to vary the threshold value for the triggering of the airbag system (18) in accordance with the result of the prediction of a collision.

## Revendications

1. Dispositif de sécurité pour véhicules automobiles, comportant un système (16) de détection des collisions et un dispositif de déclenchement (26) destiné à déclencher une opération de freinage en fonction d'un signal (a) du système de détection des collisions, dans lequel l'opération de freinage est déclenchée par actionnement d'un frein de conduite du véhicule automobile, **caractérisé en ce que** le dispositif de déclenchement (26) est conçu pour déclencher l'opération de freinage lorsque le système (16) de détection des collisions indique le début d'une collision sur la partie avant du châssis du véhicule.

2. Dispositif de sécurité selon la revendication 1, **caractérisé en ce que** le système (16) de détection des collisions fait partie d'un système de coussin gonflable (18) et sert en outre à déclencher le coussin gonflable.

3. Dispositif de sécurité selon la revendication 1 ou 2, **caractérisé en ce qu'**il comporte un système de localisation (12) destiné à localiser des obstacles à l'avant du véhicule et un dispositif de prédiction de collision destiné à prédire une collision imminente avec un obstacle et **en ce que** le déclenchement de l'opération de freinage par le dispositif de déclenchement (26) dépend également du résultat de la prédiction de collision.

4. Dispositif de sécurité selon la revendication 3, **caractérisé en ce que** le système (16) de détection des collisions comporte au moins un capteur d'accélération destiné à mesurer une accélération du véhicule provoquée par une collision et **en ce que** le dispositif de déclenchement (26) est conçu pour déclencher l'opération de freinage lorsque l'accélération dépasse une valeur de seuil (Sa) et pour faire varier la valeur de seuil (Sa) en fonction du résultat de la prédiction de collision.

5. Dispositif de sécurité selon les revendications 2 et 4, **caractérisé en ce que** le dispositif de déclenchement (28) est également conçu pour faire varier la valeur de seuil pour le déclenchement du système de coussin gonflable (18) en fonction du résultat de la prédiction de collision.
